# EUROPEAN PATENT APPLICATION

(11) **EP 4 742 619 A1**
(43) Date of publication of application: **13.05.2026**
(21) Application number: 24214594.4
(22) Date of filing: 21.11.2024
(51) Int. Cl.: H04L 51/063, H04L 51/212, H04L 51/48

(54) **COMMUNICATION SYSTEM**

(30) Priority: 08.11.2024 GB 202416504
(71) Applicant: Wowment Ltd, Sevenoaks TN15 6NL (GB)
(72) Inventor: SALUSSOLIA, Francesca, Sevensoaks TN15 6NL (GB)
(74) Representative: Adamson Jones

(57) **Abstract**

A method for sending vetted communication between first and second users, wherein the first user uses a first communication application via a first user account and the second user uses a second communication application via a second user account, the method comprising: maintaining a first platform account and a second platform account on the first and second communication applications respectively,
relaying message content from the first user to the second user via a communication platform wherein a first message is sent from the first user account to the first platform account containing the message content,
processing the message content by a monitor module to determine the presence of any inappropriate message content, the monitor module generating a signal to the platform on whether to forward the message content from the second platform account to the second user account, and
selectively sending a second message from the platform containing the message content from the second platform account to the second user account using the second communication application.

## Description

The present invention relates to an anonymous communication system, specifically allowing parties to communicate anonymously over electronic platforms.

### Introduction

The internet allows communication between two parties to happen seamlessly and instantaneously, anywhere in the world. Various communication apps provide different ways of communicating, for example, text message, voice calls, or video messaging.

The sender will identify the intended recipient of the message which is sent over a data transmission network. The recipient contact information must be known to the sender and vice-versa. However, revealing contact information can create privacy risks since it can easily be used to find other forms of privacy information about the user. For example, a user's email address or mobile telephone number can be used to find a user's name, address and social media accounts. The current system therefore creates an unnecessary risk of identity fraud.

This is a particular concern when one of the parties is a vulnerable person such as children or people with severe learning disabilities.

Current communication systems typically are not interoperable, meaning they don't allow communication across different platforms. Users must agree how to communicate beforehand, eg SMS, email etc. Some communication platforms have limited functionality, eg, cannot be used for video messaging, voice notes, or picture messaging.

It is the aim of the present invention to eliminate or mitigate one or more the above-mentioned problems.

### Statements of Invention

According to an aspect of the invention, there is provided a communication system that allows anonymous and/or vetted communication between a sender using a first communication application and a recipient using a second communication application, the communication system operating by processing a message from the first communication application of the sender at an intermediate server to (1) compare sender and/or recipient data from the message with data held in a data store of the intermediate server in order to approve a conversation between the sender and recipient, and (2) process the payload of the message received by the server to forward at least a portion of the payload to the recipient in accordance with the second communication application.

The server may act as an intermediate server to catch or receive the message prior to delivery to the recipient. The server may act in the manner of a communication relay, only with the ability to approve, deny and/or adapt messages from a sender to a recipient, e.g. in order to preserve safety and/or anonymity of the sender/recipient.

The first and second communication applications may be the same or different communication applications. The first and second communication application may use the same or different communication protocols.

The message typically comprises payload and header data, the header containing the sender and/or recipient data, e.g. as user contact data.

The server may be configured to process the header data of the message to identify/extract sender and/or recipient data. The server may identify/extract one or more fields from the header to match with data stored in the data store.

The server may comprise a conversation approval or consent module.

The server may comprise or access a data store of user data comprising user contact information and corresponding partner contact information. Partner contact information may comprise one or more approved recipient contact data. A plurality of approved recipients/partners may be logged for a single user in the data store.

The server may identify the recipient (eg second user) of the first message by matching the user contact information from the header data to a partner's contact information from the data store.

The server may send a second message to the recipient containing at least a portion of the payload of the message. The server may compose or create the second message.

The communication system may parse, vet or process the message payload/content, e.g. at the server or a content monitoring system associated with the server. The communication system may approve or disapprove the message payload/content or a portion thereof. The communication system may redact a portion of the message payload/content. The communication system may include some or all of the message payload in the second message. The communication system may modify/translate some or all of the message payload for inclusion in the second message.

The data store may comprise a log of the second communication application and/or a protocol associated therewith. The server may compose or create the second message according to the second communication application or a protocol associated therewith.

The communication system may redact or modify sender data of the message when composing or creating the second message. The communication system may redact or modify sender data of the message according to data stored in the data store. The communication system may replace sender data with sender data logged for the partner contact in the data store.

The data store may comprise correspondence, conversation or communication history for the combination of the sender and partner/recipient determined form the message header. The data store may log previous messages in the form of conversation history. The data store may identify the conversation to which the received message relates. The server may identify a new or existing conversation for the message.

The communication system may comprise a content-based router. The message received by the server may be routed to one of a plurality of channels by the server, e.g. based at least in part upon its payload, content or associated user information.

According to a second aspect of the invention, there is provided a communication method as defined in appended claim 1.

According to a further aspect there is a method of vetting communication between users of a platform, wherein the first user uses a first communication application via a first user account and the second user uses a second communication application via a second user account, the method comprising:
maintaining a platform having a first platform account and a second platform account on the first and second communication applications respectively,
receiving at the first platform account of the communication platform a message comprising message content sent from the first user via the first communication application,
relaying the received message content from the first user to the second user via the communication platform,
processing the message content by a monitor module to determine the presence of any inappropriate message content, the monitor module then generating a signal to the platform on whether to forward the message content from the second platform account to the second user account, and
selectively composing a second message having the message content and sending the second message from the second platform account to the second user account using the second communication application.

Any of the essential or optional features defined above in relation to the first aspect may be provided in conjunction with the second aspect.

According to a further aspect of the invention, there is provided a method of facilitating communication according to the system of the first or second aspect.

According to another aspect of the invention, there is provide a method for vetting and handling communication between first and second users, comprising, a first user operating a first user device, a second user operating a second user device, a communication platform configured to serve as a relay between the first and second users, wherein a first message generated on the first user device is sent to the communication platform containing content, the first message being parsed by the communication platform to extract message data from the first message, the message content is processed by a monitor module to determine the presence of any inappropriate message content and the monitor module then generates a signal to the platform on whether to forward the message to the second user device.

The invention may accommodate a plurality of communication applications used by users of the system, e.g. third party or known communication applications, by providing an intermediate server that can receive messages from any such communication applications, process the received messages and output a corresponding message to the recipient using the same or a different communication application.

The method/system may anonymise messages between senders and recipients, e.g. by replacing sender contact data from the received message header with contact data logged in the data store when delivering the message to the recipient.

The monitor module may be configured to determine inappropriate message content in multimedia messages, including picture messages, voice messages and video messages.

The method/system may make use of webhooks for messages received by the communication system/server.

The method/system may receive/output messages using HTTP.

An API may be used to output the message to the recipient in accordance with the second communication application.

The system make keep a conversation log for communications (e.g. back and forth) between the sender and recipient.

The invention may be particularly useful in the context of pairing tutors, teachers or other service providers with individuals, e.g. as a tutor/tutee or mentor/mentee arrangement.

### Brief Description of the Figures

Workable embodiments of the invention are described in further detail below by way of example only with reference to the accompanying drawings, of which:
Fig. 1 shows a schematic representation of conventional cellar network;
Fig. 2 shows a schematic representation of an example network in accordance with the invention;
Fig. 3 shows a schematic instance of communication between first and second users of a system in accordance with the invention.

### Detailed description

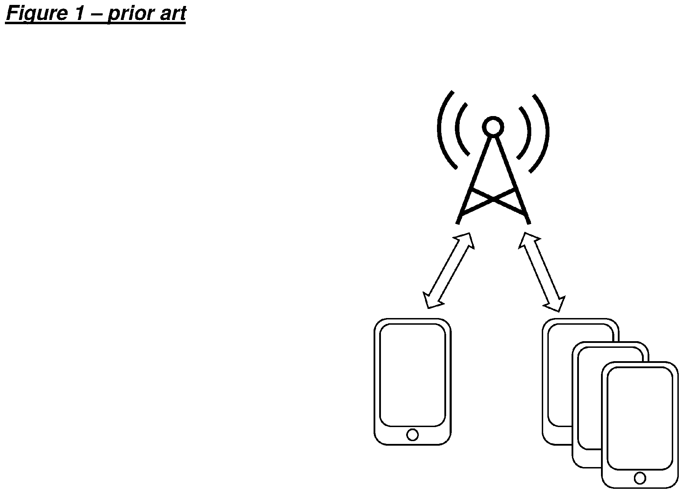

Figure 1 shows a schematic representation of a conventional cellular network wherein users communicate with one another using communication devices, e.g. a smartphone, tablet, laptop, desktop or other suitable (personal) computing device. The user devices generate a message which is intended to be sent directly to another user of the network. This system requires each of the users on the network to have contact details of the recipient to initiate contact over the network using the same third-party platform.

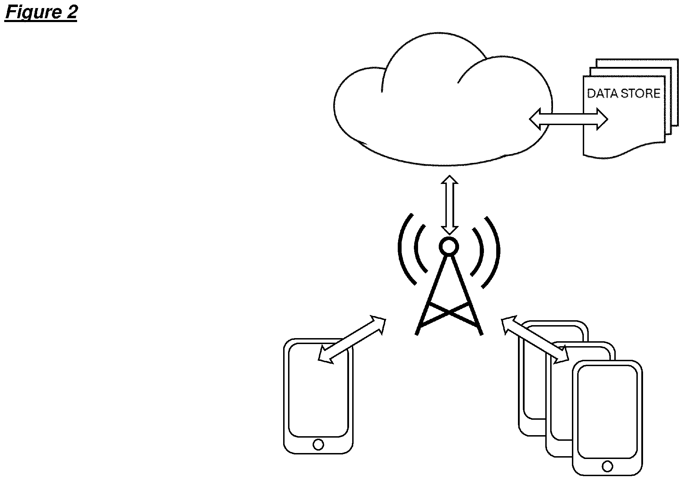

Specific embodiments of the present invention are described with aid of figures 2-3. Whilst Fig. 2 shows a cellular network again, it will be appreciated that messages may be sent/received using any conventional wide-area communication network, or combination of networks.

Figure 2 shows a schematical representation of a system of one embodiment of the invention. There are a plurality of communication user devices, cellular network and a communication platform. The purpose of the communication platform is to provide a relay between the user devices to provide a privacy barrier. Users do not have to share contact information directly with one another, meaning they can maintain anonymity, whilst still managing to communicate effectively.

The communication platform comprises a data store of user data, where a user is associated to a user communication device by one or more contact identifiers, such as contact/telephone number, email address etc. The contact identifier may comprise a number, name, tag or the like as may be used by any third party communication application to uniquely identify a user. Additional user data may be stored, e.g. further contact or personal information used to identify/verify the user, as necessary. The contact identifier may include an indication of the third party communication platform(s) used by the user. Thus the identifier may comprise an alphanumeric string used for contacting the user, accompanied by a further indicator of the communication platform to which the alphanumeric string relates.

Each user is associated to at least one other user, eg a user-pairing, however the user may have multiple user-parings for communicating with multiple different persons. The user-paring contains contact identifiers of the first and second users.

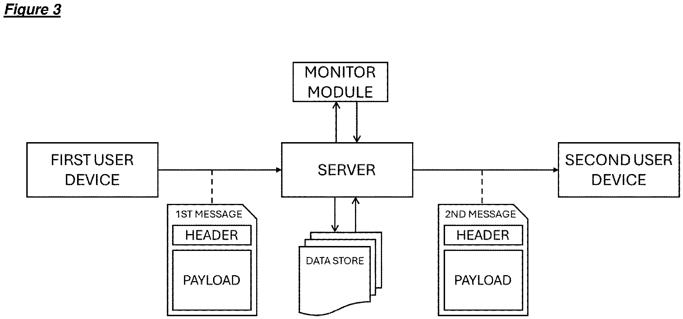

Figure 3 shows an embodiment of the present invention and how a message is sent anonymously between two users. Each user device is configured to generate messages that are sent over the network. The message comprises a header containing contact information of the first user and second user (eg the recipient), as well as other miscellaneous data such as time stamps, location data etc. The message also contains a message payload containing the actual message intended to be delivered to the second user, eg, a text message, picture, voice note, or combination thereof etc. The header and payload data may be stored in data fields, eq strings, integers, boolean, text, date etc.

In operation, a first message is sent from a 'sender' (eg a first user) of the first user device to an intended 'recipient', eg, a second user using a second user device. The first message is addressed to the communication platform instead of the second user, typically by addressing the message to the platform instead of the second user in the message header. To this end, the platform comprises one or more, typically multiple, registered accounts with the third-party communication platforms used by its users. These may be individual (i.e. personal) accounts or business accounts.

The header may therefore identify the recipient as the communication platform but may additionally contain an identifier of the actual/intended recipient so that the platform can determine the ultimate contact identifier to which the communication should be output by the platform, alternatively the header may not comprise any contact identifier of the second user. The sender contact appears as a second mobile number/email address/user account linked to our platform. For people with multiple partners (i.e. contacts using the platform) they have links to multiple contact identifiers.

The platform uses webhooks, e.g. web-based/HTTP event-driven communications. Webhooks allow an open endpoint on the server to accept HTTP requests, triggered by the user sending their message to the registered account of communication platform with the third-party communication service.

When a message is sent to one of the platform's registered accounts, a webhook is used to extract the payload and contact identifier (e.g. user's number, address or other identifier), then fed it into an associated database. The platform can then categorise the message and apply logic to work out how to route or handle the message, e.g. determine who to send it to. In a simple example, this is achieved by identifying the pairing of two users in the database (i.e. a conversation).

The platform conducts a first parsing process in which the first message is scanned to extract data from the header and/or body. This includes extracting one or more contact identifiers from the data fields of the sender which may then be used to determine the identity of the second user from the data store. A search is initiated by a signal sent by the platform to the data store using the first user's contact identifier as a search string to determine the second user's contact identifier in the data store (eg a user-pairing). For example, the contact number of the sender is extracted from the message used as a search string to search the data store which identifies the second user's contact number. The contact identifier is output as a data field. Additionally or alternatively, the header and/or body of the message may include an indication of the recipient contact identifier, such that the conversation can be looked up in the database.

Once the second user's contact identifier has been found, the platform generates a second message using the second user's contact identifier as an address. The body of the first message is copied over to form the body of the second message and sent to the second user who can view the message on their device.

No contact information of the first user (eg contact identifiers) are present in the second message, e.g. header or payload, in a way that could be accessed by the second device or any other user communication device.

The process is repeated to allow the second user (who then becomes the sender) to send a message back to the first user (who becomes the recipient). In this way a conversation, comprising messages back-and-forth between the users, can be held and logged.

In the simplest embodiment using email, the system can provide anonymity between the users by hiding the email address of sender and recipient from each other. For example, the sender having an email address of
'John.Smith@ABC.com' intends to send an email to another person with the email address of 'jo.bloggs@123.com'. Conventionally, there would need to be an exchange of email addresses to allow communication between the parties. For the system of the invention, the first user creates an email message and forwards it to the 3^{rd} party communication platform, e.g., 'HideMyEmail@privacyProtector.com' but otherwise addresses the email as intended to the recipient, Jo Bloggs.

The email (eg the first message) is received by the communication platform and parsed to extract data there from, particularly the sender's email address and the payload. The platform uses the email address to search the data store to find the intended recipients email address. The platform generates a second message with the intended recipient's contact identifier, and payload from the first message.

In other embodiments, the system utilises third party communication social media applications, such as, WhatsApp (Registered Trade mark), Facebook Messager (Registered Trade mark), Telegram (Registered Trade mark), or the like. The familiarity and ease of use of these applications promotes adoption of the system.

Channels can be set up on the third-party applications (eg WhatsApp group (Registered Trade mark)) between the users and the communication platform, eg between the first user and platform, and the second user and the communication platform. The channels are a collection or chain of messages between the users (i.e a conversation). There is a first channel set up between the first user and the platform, and a second channel for the second user and the platform. Users send messages to each other by proxy using the channels, the first user sends a first message into the channel to the platform, which is processed by the platform as discussed and forwarded to the second user in the second user channel.

User anonymity is preserved as no contact information is directly shared between them.

Third-party applications typically implement 256-sha end-to-end encryption so that only the sender and recipient can access the content of a message making independent monitoring of the messages difficult. The system of the present invention allows for channels to be set up between each user and the platform. Once a message is sent by the first user, it is encrypted on the first user device and then decrypted by the platform once received such that it can be reviewed before sending onwards to the second user. This approach can be used for any conventional encryption.

Similarly, the platform may encrypt the message it creates to send on to the second user (where accommodated by the relevant third part app) so that the message is secured when delivered and decrypted by the second user using the third part application. It is possible that the received message is encrypted but the message output by the platform to the second user is not - or vice versa. It is also possible that different encryption can be applied to the received and output messages to suit the communication applications being used by each user.

Once a user-pair is formed, the platform determines whether any dummy user accounts are needed for any of the channels. The dummy accounts serve as intermediate privacy barriers between the users. The dummy account may be associated to an email, telephone number or any other suitable contact identifier. The platform forms the first channel with a dummy account and the first user, and a second channel with a dummy account with the second user. For example, where communication application is WhatsApp (Registered trade mark) the dummy accounts are profiles that have profile pictures and a registered telephone number. The platform may generate unique dummy account for the user pair, eg both channels their own unique dummy accounts.

The platform's dummy accounts may present as one of the users in the channel such to give the appearance that the users are communicating directly with each other (e.g. the platforms profile information corresponds to the second user instead of the platform). This may take the form of the platform setting up different profiles in each channel that correspond to the second user, e.g. a unique display profile picture and/or profile name. The profile name may correspond to the name of the second user (e.g. the second user's first name) or a randomly generated alias. The alias/display name may be stored in the data store. The platform may give the users the option of adopting an alias or pseudonym.

In some embodiments, there message is relayed from the first user to the second user via one dummy account.

The dummy accounts may be first and/or second platform accounts.

Once a user-pair has been generated, the platform sends a signal to the third-party applications to establish the first and second channels.

Where the third party application requires a registered telephone number, the platform assigns a dummy account a telephone number from either physical sim or eSim card.

The platform may, therefore, comprise a sim device or plurality of devices for operating/managing/routing the messages to and from the device(s).

The platform comprises a monitor module configured to make/monitor payload data for contact information, inappropriate messages or messages appearing to enlist inappropriate actions between the users. This ensures user safety as well as anonymity. Once a message has been received and parsed by the platform, the monitor module scans the payload before sending it to the second user.

If inappropriate content is deemed to be present, the message can be halted from being forwarded and is flagged for review by a system administrator. The administrator may be a real person reviewing the message or an Al, eg a neural language model. Additionally or alternatively, the message can be flagged to the sender, e.g by a reply or similar using the sender's third-party communication application. Flagging the message as 'undelivered', 'held' or 'inappropriate' may include a comment on why the message has been flagged, e.g. an indication of the nature of the content resulting in the message status. The user may be presented with one or more options, e.g. an option to rewrite or recompose the message for sending and/or an option to override the flagged status so that the original message is delivered. A flagged message may trigger the platform to send an additional message or call-to-action element along with the flagged message, indicating the message as potentially inappropriate and prompt the second user to confirm whether the message is safe or not. The second user can respond by clicking a button or typing a pre-selected trigger word into the chat which then sends a signal back to the platform to act accordingly. For example, the platform may prompt the second user to respond with the word 'safe' or 'unsafe' depending on whether the second user deems the message to be inappropriate or not. If the message is flagged unsafe, a signal is sent to the system administrator to review or further review the flagged message.

The monitor module may configure to detect swear words, hate speech, racial slurs, pornographic material, etc. Settings may allow more stringent/relaxed policies to be implemented for the platform as a whole or else for certain categories of users (e.g. according to age, vulnerability, etc).

The monitor module is configured to monitor exchange of contact identifiers, including contact information such as telephone/mobile numbers, addresses and email addresses.

The monitor module may comprise sentiment analysis module to detect the tone of messages. The sentiment analysis module may determine assess volume the of voice message/recording against a predetermined decibel level or wave level, eg module monitors the wave form of a message and flags anything above equivalent 70 dB which is indicative of shouting. The module can detect sentiment changes which are symptomatic of behaviour changes, for example, frequency of messages, number of messages, increase use of capital letters. The module may conduct spelling and grammar checks where pre-selected percentage of errors in a given message by symptomatic of a user trying to deceive the monitor module, and flag the messages for review.

Accordingly, the server/communication system (e.g. the platform) provides for complex routing-based method for forwarding on message content and appropriate channels. The system can thus handle different messages differently according to their content. In one example, this allows establishment of a feedback loop with the third-party communication platform, e.g. so that feedback on the message status can be provided to the sender/user using their communication app.

In certain embodiments, the ability to monitor communication between paired users of the system allows feedback or prompting by the system in other ways.

Hierarchical conditional logic may be used by the server, e.g. based on system events. That is to say, the server may monitor and/or log communication events, such as message timings and/or content, etc. Based on the monitored communication parameters/content action events may be implemented by the server. For example, the server may output message or prompts to the sender/recipient, such as: encouraging either member of the pair to send a message if they have been dormant for a while; alerting an administrator if one of the pair has stopped responding; asking either member of the pair if there have been any offline communications between them; making a log of this etc.

The conditional logic automates triggers action events. The events can be triggered after particular actions or are time based. For example:
- Inactivity - if predetermined time interval has lapsed between the last message (eg three days), a trigger is activated to send a message to the first and/or second user alerting them.
- Calendar events - once a meeting is agreed, the platform can initiate a trigger to schedule a meeting accordingly in a third-party application and set-up a calendar event and issue reminders leading up to the event. Messages between the users can be parsed to automate much of the process, eg, date, time and appropriate platform. A trigger as also created to prompt one or both the users after the event to confirm the meeting occurred and determine if further action is necessary.
- Tasks - if a task (for example, work that is to be completed offline) is agreed upon by one or both users, the platform triggers an action to determine if the work is completed and if not trigger a further action.
- Achievements - once certain milestones have been reached, such as 7 or 30 day active streaks; send 250, 500, 1000, 10000 messages or holding a meeting every month, the platform can trigger an action to send the user reward or message.

The history of the triggers/actions can be kept in a log. The platform can send the log to one or both the users separately from the channel for ease of review eg, without the other parts of the conversation.

The automated triggers provides some autonomy to the users meaning less burden on the system administrator.

AI models have been developed for use in parsing the content of a message. The models look for certain criteria in a message, such as any, or any combination of:
- anything indicative of an attempt to share their contact details or other personal information;
- anything the model is established to think as inappropriate. This may be based on language used and the age or the sender/recipient. Additionally or alternatively there may be indicators of inappropriate content, regardless of age/vulnerability.
- anything indicative of an adverse state of mind of a user. An AI sentiment analysis model has been established to detect if someone is distressed based on the content of one or more messages.

The first phasing step can also apply logic operations to determine the sender of the message, by determining if there is a message header, and then determining if there is a data field corresponding to the sender, typically a data field containing a contact ID, a telephone number or an email address. The order of operation can be varied to look for a the most likely type of user contact data.

Based on one or more of the above, communication/conversation between a pair of users may be paused by the platform and/or the user/pair may be flagged for assistance by an administrator, carer or the like.

The platform can also monitor for a range of criteria such as lack of messaging, creating records offline meetings etc.

If after review, the message is determined to be safe, the content/payload is approved for sending to the recipient and forms the content/payload of an outbound message from the server to the recipient (eg second user).

The platform generates a new message which is sent to the intended recipient without including any contact information that can be used to determine the identity of the first user.

The platform can hold a complete record of all of the communication for a user sent via the platform for any partner in the user's partner channel. The platform can also maintain a log of time staps, plus any messages and responses to our system directly from the user, e.g. not intended for one of their partners.

The above description refers simply to messages but can also handle multimedia messages or attachments. Multimedia files are downloaded by the platform and then forwarded with the outbound message to the recipient in their original format.

These multimedia components could also be checked for suitability by the monitor system before forwarding. Images, documents, video, audio/voice messages can also therefore be shared using the platform without users exchanging actual/personal contact details As well as allowing safe communication, the platform also allows a powerful audit tool, with each payload being logged to build a conversation history.

The system also comprises an internal call and video calling feature so that user-pairs can hold voice and video calls through the platform. A secure link is sent to both the first and second users and they log in without sharing any other contact details. The users follow the link sent to them in the chat, similar to sending a Teams (Registered trade mark) or a Zoom (Registered trade mark) link. Since the call is setup internally of the platform it means that there is no sharing of contact details.

Effectively users would not need to know their partners' actual contact details when using the platform. If users have each others private contact details the communication cannot be stopped. One of the advantages is that the platform can be used to turn communications on and off between partners, safeguarding them in the long term. The platform may offer a communication toggle for permitting or blocking communication between specific users.

The communication platform also allows for continue communication even when user changes contact information, e.g. a new telephone number. The user updates their contact information on the platform which updates the contact information in the data store. The users can continue communication, the second user not being aware of the first user's change of contact number.

According to aspects of the invention there may be provided any or any combination of:
1) communication without sharing contact details
2) communication across differing 3rd party platforms (whether or not anonymous)
3) Audit trails, extraction of communication data and responsiveness to said 30 data, e.g. redacting message content or using hierarchical conditional logic enhance engagement and support communication.

The platform allows for interoperable communication across the different communication applications allowing the first and second users to communicate using different applications. For example, the user can use a first communication application (eg WhatsApp (registered trade mark)) and the second user to use a second (different) communication application (Facebook Messager (registered trade mark)). The platform determines from the webhook the application type from the first user and formats the second message (eg the HTTP) according the second user's communication preferences. The data store may contain the communication application preferences of each user and sends the messages accordingly.

The platform comprises a direct user access area to allow users to create a user account, login and manage user preferences. The sign-up area comprises a user form for the user to input contact information/identifiers and communication preferences (eg, names, date of birth, location data, preferred languages etc) which are then stored in the data store.

Users can access the platform via a website or mobile application.

The platform can pair users based on suitability (either using AI or a logic tree), or allow users to choose their own partners. In one embodiment, once the user has an account, they can select a partner from a list of potential partners visible on the platform and filter based on certain criteria, for example, age, location, languages, speciality. The user selects a partner and the platform establishes user-pairing between them (eg in the data store). The platform may send an authorisation request to the partner before establishing a connection, e.g. by sending a message to the second user stating 'Person X wishes to connect', where the second user must give explicit consent to be contacted by the other user. The monitor module may vet the user pairing before allowing communication between the users and if it deems the pairing to be unsuitable, flag the paring for further review by a system administrator (e.g. by a human) and/or prompt the first and/or second user for further consent.

Users can be matched by the platform, e.g. by an administrator or via Al.

The platform may implement additional fail safes, such as parental controls, allowing a third user to control certain permissions on behalf of another user, using a third communication device. The third user can selectively deny user parings through the platform by authorising a contact request from their device which sends a signal to the platform which alters the user pairing status accordingly. The third user has direct access to all unvetted communications between the first and second users. The platform may establish a new channel for the third user with the platform and copy all payload data from the users into the channel. The third user may instead have access to one or both of the first and second user channels.

The first, second and third user may have alert commands with the communication application to directly alert the platform, e.g. the monitor module thereof, of suspicious communications for review. The alert command may be an interactive call-to-action element such as a button, or alphanumeric string that the user types into the channel chat. The alert command sends a signal to the monitor module which suspends and/or terminates communication between the users. The monitor module adjusts the user pairing status accordingly, eg to terminate or suspend the pairing by sending a signal to the data store to update the status.

The monitor module keeps a log of flagged actions, e.g. suspicious communications or alert actions, regardless of the current status of the user pairing. When a communication is flagged for review to the monitor module, the command is automated to search the log for previous flagged actions of the user and are further outputted to the system administrator.

The monitor module may run behavioural pattern detection methods to determine similar types of communications that have occurred before. For example, determining if a user attempts to direct another user to use an alternative platform or send contact information.

If a user has been previously flagged as trying to provide a contact number to another user in a manner attempting to deceive or circumvent the monitor module, for example by using combination of words, numbers and punctuation characters, the module uses machine learning to identify similar patterns in future communications.

In some embodiments there may be a single channel for direct communication between the first and second user and also the platform as a third user the (e.g. a group chat) wherein the platform maintains administrative controls of the channel (and the first and second users do not have administrative control). Messages sent by the first and second users are sent unvetted to each other, the monitor module then reviews the message afterwards and acts accordingly. If a message is deemed to be inappropriate, a signal is sent from the platform to the third user account to utilise the channel admin controls and mute or kick the offending user from the channel. In some embodiments, the platform may generate the first and second user accounts respectively for the first and second users and send them the account details at the time the user first registers with the platform, or once a user-pair has been established If a user's message is deemed inappropriate, the platform sends a signal to suspend the user's access to the account, which may include forcibly signing out the user, and/or changing the password.

## Claims

1. A method for sending vetted communication between first and second users, wherein the first user uses a first communication application via a first user account and the second user uses a second communication application via a second user account, the method comprising:
maintaining a first platform account and a second platform account on the first and second communication applications respectively,
relaying message content from the first user to the second user via a communication platform wherein a first message is sent from the first user account to the first platform account containing the message content,
processing the message content by a monitor module to determine the presence of any inappropriate message content, the monitor module generating a signal to the platform on whether to forward the message content from the second platform account to the second user account, and
selectively sending a second message from the platform containing the message content from the second platform account to the second user account using the second communication application.

2. A method according to claim 1, wherein the signal halts the platform from sending at least part of the message content from the second platform account to the second user account.

3. A method according to claim 1 or 2, wherein the signal halts the platform from sending all of the message content from the second platform account to the second user account.

4. A method according to claim 1, wherein the signal instructs the platform to send at least part of the message content from the second platform account to the second user account.

5. A method according to any of claims 1-4, wherein the monitor module is configured to parse the message content to determine inappropriate content in text, video or multimedia messages.

6. A method according to claim 5, wherein the inappropriate message content includes contact identifier of the first user, including contact information such as name, telephone numbers or email addresses.

7. A method according to any of the previous claims, wherein the platform comprises a data store comprising contact identifiers of the first and second users, the data store comprising user-pairs where the first user account associated to the second user second user account.

8. A method according to claim 7, wherein the platform parses the first message to extract the contact identifiers of the first user and searches the data store user-pairs to determine a second user account.

9. A method according to claim 8 when appended to claim 4, wherein the platform generates the second message with the message content of the first message absent of any contact identifiers of the first user.

10. A method according to any of the previous claims, where the first and second communication application are the same.

11. A method according to claim 1, where the first communication application is a different application from the second communication application.

12. A method according to claim 1, where the platform received the first message as a webhook request.

13. A communication system for message transmission, comprising
a first user device configured to send a first message, and a second user device configured to receive a second message,
the first message containing payload and header data, the header containing user contact information,
a server configured to receive the first message from the first user device, comprising
a parsing module configured to process the header data of the first message extract user contact information,
a data store of user data comprising user contact information and corresponding partner contact information,
where the server identifies the recipient of the first message by matching the user contact information from the header data to a partner's contact information from the data store, and sends a second message to the second user device containing the payload of the first message.

14. A communication system according to claim 13, comprising a monitoring module configured to analyse the content payload of the message and configured to send a signal to a system administrator if predetermined content is detected.

15. A communication system according to claim 13, comprising a sentiment analysis module configured to detect the sentiment and tone of message and configured to signal to a system administrator of inappropriate or sentiment changes.
